# EUROPÄISCHE PATENTSCHRIFT

(11) **EP 3 411 534 B1**
(45) Veröffentlichungstag und Bekanntmachung des Hinweises auf die Patenterteilung: **13.08.2025**
(21) Anmeldenummer: 17716458.9
(22) Anmeldetag: 07.04.2017
(51) Int. Cl.: E02F 9/26, B66C 13/46, G05D 1/00, B64U 101/30

(54) **VERFAHREN UND VORRICHTUNG ZUM STEUERN EINES KRANS, EINES BAGGERS, EINER RAUPE ODER EINER ÄHNLICHEN BAUMASCHINE**
METHOD AND DEVICE FOR CONTROLLING A CRANE, A BAGGER, A CRAWLER, OR A SIMILAR CONSTRUCTION MACHINE
PROCÉDÉ ET DISPOSITIF DE COMMANDE D'UNE GRUE, D'UNE PELLE MÉCANIQUE, D'UN ENGIN À CHENILLES OU D'UN ENGIN DE CONSTRUCTION SIMILAIRE

(30) Priorität: 08.04.2016 DE 102016004250
(43) Veröffentlichungstag der Anmeldung: 12.12.2018
(73) Patentinhaber: Liebherr-Werk Biberach GmbH, 88400 Biberach an der Riß (DE)
(72) Erfinder: PALBERG, Michael, 88499 Riedlingen (DE); RESCH, Jürgen, 88456 Degernau (DE); FENKER, Oliver, 88447 Warthausen (DE)
(74) Vertreter: Thoma, Michael
(86) Internationale Anmeldenummer: PCT/EP2017/000451
(87) Internationale Veröffentlichungsnummer: WO 2017/174203

(56) Entgegenhaltungen:
- EP-A1- 2 993 620
- WO-A1-2015/179797
- CN-U- 205 080 731
- DE-A1- 102014 009 165
- DE-A1- 102014 218 749
- DE-B3- 102013 019 098
- US-A1- 2016 018 551
- US-A1- 2016 050 840

## Beschreibung

Die vorliegende Erfindung betrifft allgemein die Steuerung von Materialumschlags- und/oder Baumaschinen mit Kameraunterstützung. Die Erfindung betrifft dabei einerseits ein Verfahren zum Steuern einer Materialumschlags- und/oder Baumaschine insbesondere in Form eines Krans, eines Baggers oder einer Raupe, wobei einem Maschinenführer und/oder einer Maschinensteuerung von einem bildgebenden Sensor ein Bild des Arbeitswerkzeugs bereitgestellt wird. Die Erfindung betrifft ferner auch die Materialumschlags- und/oder Baumaschine selbst, insbesondere einen Kran, mit einer Anzeigevorrichtung zum Anzeigen eines Bilds des Arbeitswerkzeugs und/oder der Arbeitswerkzeugumgebung.

Eine Baumaschine der genannten Art ist aus der Schrift DE 10 2014 218 749 A1 bekannt, wobei dem Maschinenführer von einer Flugdrohne ein Kamerabild des Lasthakens bereitgestellt wird, die dem Lasthaken automatisch folgt. Weitere Flugdrohnen für Arbeitsmaschinen sind aus den Schriften EP 2 993 620 A1, DE 10 2014 009 165 A1, DE 10 2013 019 098 B3, US 2016/050840 A1 und WO 2015/179797 A1 bekannt.

Bei Kranen wie beispielsweise Turmdrehkranen, Teleskopkranen und Hafenkranen oder Baumaschinen wie Baggern oder Flurförderzeugen wie Surface Minern ist es im Betrieb oft so, dass das vom Maschinenführer zu kontrollierende Arbeitswerkzeug nicht im Blickfeld des Maschinenführers liegt. Wird beispielsweise mit dem Lasthaken eines Krans hinter einer Gebäude- bzw. Sichtkante eine Last aufgenommen oder abgesetzt, ist der Lastaufnahme- oder -absetzort für den Kranführer bisweilen nicht einsehbar, so dass der Kranführer sozusagen blind arbeiten und sich auf die Anweisungen eines Einweisers verlassen muss. In . ähnlicher Weise kann es auch bei anderen Bau- bzw. Materialumschlagsgeräten wie beispielsweise einem Bagger dazu kommen, dass der Maschinenführer das Arbeitswerkzeug nicht mehr sieht, beispielsweise wenn mit einem Grablöffel oder einem Greifer in einer tieferen Grube oder hinter einer Böschung gearbeitet wird.

Um bei solchen Arbeiten in sichtbehinderten Bereichen die Kontrolle des Arbeitswerkzeugs zu verbessern, wurde bereits vorgeschlagen, dem Maschinenführer bzw. der Maschinensteuerung ein Kamerabild des Arbeitswerkzeugs bereitzustellen, wobei das genannte Bild vorteilhafterweise ein Echtzeit- bzw. Livebild im Sinne eines Videobildes sein kann, um beispielsweise Pendelbewegungen des Lasthakens eines Krans oder ein in der Umgebung des Arbeitswerkzeugs liegendes Hindernis zu visualisieren.

Bei Turmdrehkranen wurde beispielsweise bereits vorgeschlagen, eine Kamera an der Laufkatze zu montieren, die in Richtung des ablaufenden Hubseils nach unten auf den Lasthaken blickt, wobei mit Hilfe einer Bildauswertung die Lasthakenposition automatisch bestimmt wird, vgl. DE 20 2012 012 116 U1. Allerdings muss bei dieser vorbekannten Kameraanordnung die Höhe des Lasthakens rechnerisch ermittelt werden und das Kamerabild ist beim Kontrollieren der Lasthakenhöhe beispielsweise beim Absetzen einer Last auf dem Boden oder dem Einfädeln in einer Öse keine große Hilfe, da die Kamera senkrecht nach unten blickt.

Ferner ist aus der Schrift DE 198 07 989 A1 bekannt, eine Videokamera an der Hakenflasche des Krans anzubringen, die ein Kamerabild von der am Lasthaken angebrachten Last an einen im Kranführerhaus befindlichen Monitor übermittelt. Allerdings unterliegt auch diese nach unten schauende Kamera den vorgenannten Beschränkungen.

Der vorliegenden Erfindung liegt daher die Aufgabe zugrunde, ein verbessertes Verfahren sowie eine verbesserte Vorrichtung zum Steuern einer Materialumschlags- und/oder Baumaschine sowie eine verbesserte Materialumschlags- und/oder Baumaschine selbst zu schaffen, die Nachteile des Standes der Technik vermeiden und Letzteren in vorteilhafter Weise weiterbilden. Insbesondere soll eine verbesserte Visualisierung des Arbeitswerkzeugs relativ zu dessen Umgebung auch in schwierigen sichtbehinderten Bereichen geschaffen werden.

Erfindungsgemäß wird die genannte Aufgabe durch ein Verfahren gemäß Anspruch 1, eine Materialumschlags- und/oder Baumaschine gemäß Anspruch 5 gelöst. Bevorzugte Ausgestaltungen der Erfindung sind Gegenstand der abhängigen Ansprüche.

Es wird also vorgeschlagen, eine ferngesteuerte, mit zumindest einem bildgebenden Sensor ausgerüstete Flugdrohne zu verwenden, mittels dessen das gewünschte Bild des Arbeitswerkzeugs und/oder der Werkzeugumgebung aus verschiedenen Blickrichtungen bereitgestellt werden kann. Insbesondere kann mittels einer solchen Flugdrohne auch ein perspektivisches, dreidimensionales Bild des Arbeitswerkzeugs und dessen Umgebung aus schrägen Blickachsen bereitgestellt werden, die von einem Punkt beabstandet von der Maschine und dessen Führerstand und oberhalb des Bodens gewonnen werden können, so dass dem Maschinenführer das Arbeitswerkzeug und dessen Umgebung aus einer Blickrichtung visualisiert werden kann, wie sie auch ein externer Betrachter sehen würde. Bei einem Kran können beispielsweise Bilder des Lasthakens und dessen Umgebung bereitgestellt werden, die von der Seite her schräg oder senkrecht auf die vertikale Kranmittelebene durch den Ausleger schauen. Auch aus Drohnenpositionen, die in dieser durch den Ausleger gehenden, vertikalen Kranmittelebene liegen, können Bilder des Lasthakens bereitgestellt werden. Durch solche perspektivischen Bilder aus verschiedenen Blickachsen können die Relativpositionen zwischen Arbeitswerkzeug und dessen Umgebung bzw. einem Zielpunkt sehr viel besser visualisiert werden.

Dabei werden verschiedene Typen von bildgebenden Sensoren an der Flugdrohne eingesetzt. Vorteilhafterweise wird eine Kamera insbesondere in Form einer Video- oder Fernsehkamera an der Flugdrohne montiert, mittels derer ein sehr realistisches Bild der Lasthakenumgebung bereitgestellt werden kann, die dem Maschinenführer das Gefühl vermittelt, mit eigenen Augen zu sehen.

Zusätzlich wird als bildgebender Sensor ein Infrarotsensor vorgesehen, wobei zusätzlich auch noch ein Radarsensor und/oder ein Photomischdetektor und/oder ein Lichtlaufzeitsensor im Sinne eines sog. Time-of-Flight-Detektors vorgesehen sein kann. Bei einem solchen Lichtlaufzeit- oder PMD-Sensor werden die Messobjekte von Lichtimpulsen angeleuchtet und die Signallaufzeit gemessen. Aufgrund der Laufzeit kann die Entfernung zwischen Kamera und Objekt errechnet werden. Das resultierende Entfernungsbild kann anschließend auf verschiedene Weisen dargestellt werden (z. B. Farben als Distanzen). Zusätzlich zu der Entfernung kann ein Grauwertbild aus der Intensität des reflektierten Lichts berechnet werden

Erfindungsgemäß sind an der Flugdrohne mehrere bildgebenden Sensoren unterschiedlicher Bildgattung, umfassend eine Kamera in Verbindung mit einem Infrarotsensor, zur Erfassung verschiedener Bilder vorgesehen werden. Die verschiedenen Bilder können auf verschiedenen Anzeigeeinheiten oder verschiedenen Abschnitten derselben Anziegeeinheit dargestellt werden. Vorteihafterweise werden die Bilder zumindest zweier verschiedener Sensoren von einem Bildbearbeitungs-Modul auch überlagert werden und als gemeinsames Bild angezeigt dergestalt, dass in ein "normales" Kamerabild die wärmeren Partien eines Infrarotbilds, die beispielsweise Personen darstellen können, eingeblendet werden.

In vorteilhafter Weiterbildung der Erfindung kann die Kamera bzw. die bildgebende Sensorik auch dazu ausgebildet sein, ein dreidimensionales Bild des Arbeitswerkzeugs bzw. dessen Umgebung bereitzustellen. Hierzu kann bspw. eine TOF- bzw. Time-of-Flight-Sensorik wie zuvor erläutert eingesetzt sein. Durch 3D-Bildtechnik kann eine plastische Darstellung erzeugt werden, die dem Maschinenführer auch ein Gefühl für die Tiefe des dargestellten Raums gibt.

Um eine einfache Bedienung der Flugdrohne zu ermöglichen, wird die Flugdrohne in Abhängigkeit einer Maschinenstellung und/oder Arbeitswerkzeugposition angesteuert derart, dass die Flugdrohne Maschinen-, insbesondere Arbeitswerkzeugbewegungen automatisch folgt und eine gewünschte Position relativ zu der Maschine und/oder deren Arbeitswerkzeug auch bei Maschinenbewegungen, insbesondere Arbeitswerkzeugbewegungen zumindest näherungsweise hält bzw. zu halten versucht und nachfährt. Wird die Flugdrohne beispielsweise in Verbindung mit einem Kran verwendet, kann die Flugdrohne bei aktiviertem, automatischem Folgemodus dem Lasthaken des Krans automatisch folgen. Wird beispielsweise eine Relativposition der Flugdrohne etwa auf Lasthakenhöhe bzw. ein Stück weit oberhalb mit seitlicher Beabstandung zur vertikalen Kranmittelebene durch den Ausleger gewünscht und eingestellt, kann die Flugdrohne ihre Flughöhe automatisch erniedrigen oder erhöhen, wenn der Lasthaken abgesenkt oder angehoben wird, und/oder parallel zur vertikalen Kranmittelebene vor- oder zurückfliegen, wenn die Laufkatze des Krans verfahren wird und/oder seitlich quer nach links oder rechts fliegen, wenn der Kran verdreht wird.

Vorteilhafterweise kann die Flugdrohne jedoch auch autonom ferngesteuert werden derart, dass von der Flugdrohne verschiedene gewünschte Positionen relativ zu der Maschine und/oder deren Arbeitswerkzeug frei angeflogen werden können. Dies kann beispielsweise durch Eingeben einer Wunschposition für die Flugdrohne relativ zum Lasthaken bzw. dem Arbeitswerkzeug erfolgen, beispielsweise dergestalt, dass in einem Positionssteuerungsmodul, das in der Kranführerkabine oder einem Führerstand oder einem Fernsteuerstand vorgesehen sein kann, eine Position in Bezug auf den Lasthaken eingegeben wird, beispielsweise in Form "2 m oberhalb seitlich rechts vom Lasthaken". Zusätzlich kann jedoch die Flugdrohne auch gänzlich frei gegenüber der Maschine und deren Arbeitswerkzeug verflogen werden, beispielsweise mit Hilfe eines Joysticks, um die Flugdrohne so lange zu verfliegen, bis die Kameraposition und deren Blickwinkel auf das Arbeitswerkzeug und dessen Umgebung dem Kranführer bzw. Maschinenführer zusagt. Zusätzlich kann auch eine Gestensteuerung für die Flugdrohne vorgesehen sein, bei der eine Erfassungseinrichtung wie beispielsweise eine Kamera mit nachgeordeter Bildauswerteeinrichtung Gesten des Maschinenführers wie beispielsweise Handbewegungen erfasst und in Steuerbefehle für die Flugdrohen umsetzt.

Um die Flugdrohne relativ zu der Maschine bzw. deren Arbeitswerkzeug positionieren und beispielsweise Arbeitswerkzeugbewegungen automatisch nachfahren zu können, kann die Flugdrohne in einem relativen, maschinen- bzw. kranfesten Koordinatensystem positionsgesteuert werden. Hierzu kann eine Positionsbestimmungseinrichtung vorgesehen sein, die die Flugposition der Flugdrohne relativ zu der Maschine kontinuierlich oder zyklisch bestimmt, wobei eine solche Positionsbestimmungseinrichtung beispielsweise eine Signal-Ortungseinrichtung aufweisen kann, die von der Flugdrohne kommende und/oder an die Flugdrohne gesendete Signale orten und/oder hinsichtlich bestimmter Signaleigenschaften auswerten kann, um hieraus die Relativposition der Flugdrohne zur Arbeitsmaschine zu bestimmen.

Eine solche Signal-Ortungseinrichtung kann beispielsweise dergestalt realisiert sein, dass an dem Kran bzw. der Maschine mehrere Sende-Empfangseinheiten angebracht werden, die mit einer Sende-Empfangseinheit an der Flugdrohne kommunizieren, so dass aus den Signallaufzeiten und/oder Signalstärken und/oder Signalrichtungen im Sinne der Verbindungslinien zwischen den verschiedenen kran- bzw. maschinenseitigen Sende-/Empfangseinheiten zu der Sende-/Empfangseinheit der Flugdrohne deren Position relativ zum Kran bzw. der Maschine bestimmt werden kann. Die genannten Sende-/Empfangseinheiten können beispielsweise Transponder oder Nahbereichs-Sende-/Empfangseinheiten sein. Im Falle eines Krans können die genannten Sende-/Empfangseinheiten beispielsweise am Ausleger, an der Laufkatze, am Turm und/oder am Lasthaken selbst angebracht sein. Insbesondere können die Signallaufzeiten von der jeweiligen Sende-/Empfangseinheit am Kran bzw. der Maschine zu der Flugdrohne und/oder zurück von der Flugdrohne zu der maschinenseitigen Sende-/Empfangseinheit bestimmt und/oder Signalstärken erfasst und/oder die Richtungen, in denen maximale Signalstärken auftreten, bestimmt werden, um aus den Signallaufzeiten und/oder Signalstärken und/oder Signalrichtungen maximaler Signalstärke die Position der Flugdrohne relativ zur Maschine zu bestimmen.

Alternativ oder zusätzlich zu einer solchen relativen Positionsbestimmung in einem maschinenfesten Koordinatensystem können auch die Positionen der Flugdrohne einerseits und der Maschine und/oder deren Arbeitswerkzeug andererseits jeweils in einem absoluten Koordinatensystem bestimmt werden, so dass aus den beiden Absolutpositionen wiederum die Relativposition bestimmt werden kann und in der zuvor beschriebenen Weise beispielsweise die Flugdrohne derart angesteuert werden kann, dass die Flugdrohne einem Lasthaken bzw. einem Arbeitswerkzeug und dessen Bewegungen automatisch folgt bzw. zu folgen versucht.

Die genannte absolute Positionsbestimmung kann beispielsweise mittels eines Ortungssystems, beispielsweise einem GPS-System erfolgen. Beispielsweise kann die Flugdrohne einerseits und der Lasthaken andererseits jeweils mit einer GPS-Einheit ausgestattet sein, um einerseits die absolute Raumposition des Lasthakens und andererseits die absolute Raumposition der Flugdrohne zu bestimmen. Die Raumposition des Lasthakens kann näherungsweise aber auch aus den bekannten Bewegungs- und/oder Stellungsdaten der Arbeitsmaschinenkomponenten wie beispielsweise dem Drehwinkel eines Turmdrehkrans, der Laufkatzenstellung und der Lasthaken-Höhe bestimmt werden, aus denen bei bekanntem Aufstellort zumindest näherungsweise, insbesondere unter Vernachlässigung von Pendelbewegungen und/oder Windeinflüssen, die Lasthakenposition bestimmbar sind.

Alternativ oder zusätzlich zu einem Nachjustieren der Flugposition der Drohne kann in Weiterbildung der Erfindung auch die Blickachse und/oder die Brennweite der Kamera bzw. der bildgebenden Sensorik der Flugdrohne relativ zum Korpus der Flugdrohne nachjustiert werden, insbesondere derart, dass die Kamera bzw. Sensorik an der Flugdrohne verschwenkt und/oder in ihrer Brennweite verstellt wird, um einer Lasthaken- oder Arbeitswerkzeugbewegung automatisch zu folgen. Wird beispielsweise der Lasthaken eines Krans ein Stück weit abgesenkt, kann die bildgebende Sensorik an der Flugdrohne beispielsweise ein Stück weit nach unten schwenken, um der Lasthakenbewegung zu folgen bzw. den Kranhaken im Bild zu behalten. Hierbei kann die Flugdrohne ihre Flughöhe halten oder ggf. zusätzlich ebenfalls ein Stück weit tiefer gehen. Der Kamera-Schwenkwinkel und/oder die Kamerabrennweite kann hierbei insbesondere in Abhängigkeit der Relativposition zwischen dem Arbeitswerkzeug und der Flugdrohne berechnet werden. Alternativ oder zusätzlich können diese Einstellungen auch mit Hilfe eines Bildverarbeitungsprozesses gesteuert werden, mit Hilfe dessen die Position des Arbeitswerkzeugs, insbesondere Lasthakens, im Bild ermittelt und Bewegungen aus dem Bildzentrum heraus überwacht werden können, so dass die Blickachse und/oder die Brennweite der bildgebenden Sensorik nachjustiert werden kann, um die Arbeitswerkzeug- bzw. Lasthakendarstellung im Bildzentrum mit näherungsweise gleich bleibender Darstellungsgröße zu halten. Veränderungen des Blickwinkels und/oder der Brennweite können mit Veränderungen der Flugposition der Flugdrohne überlagert werden.

Eine solchermaßen veränderbare Ausrichtung der Blickachse der Bildgebende Sensorik relativ zur Flugdrohne und/oder Brennweitenverändern kann insbesondere dann vorteilhaft sein, wenn die Flugdrohne beispielsweise aufgrund von bestehenden Gebäudeteilen oder Umgebungshindernissen wie Bäumen nicht beliebig ihre Position ändern kann.

Gemäß der Erfindung wird die Positionssteuerung der Flugdrohne in Abhängigkeit von Arbeitsbereichsbegrenzungen gesteuert, wobei die Positionssteuerung die Flugdrohne zusätzlich auch in Abhängigkeit von Baustellen-Modelldaten und/oder Hinderniserfassungs-Daten, die an der Flugdrohne selbst gewonnen werden können, gesteuert werden. Wird die Flugdrohne beispielsweise in dem zuvor beschriebenen automatischen Folgemodus betrieben, in der die Flugdrohne dem Lasthaken eines Krans automatisch folgt, könnte es beispielsweise dazu kommen, dass bei Verdrehung des Krans um seine aufrechte Turmachse die Flugdrohne seitlich quer mitfliegt, um die Position zum Lasthaken zu halten, und dabei in Kollision mit einem Gebäudeteil kommt, obwohl der Lasthaken selbst das Gebäudeteil noch nicht erreicht. Berücksichtigt die Positionssteuervorrichtung der Flugdrohne Arbeitsbereichsbegrenzungen und ggf. zusätzlich auch Baustellen-Modelldaten, wobei die Flugdrohne auch selbst eine Hinderniserkennung beispielsweise mittels eines Radar- oder Ultraschallsensors aufweisen kann, um Hindernisse erkennen zu können. Die automatische Folgesteuerung wird dann übersteuert und der automatische Folgemodus außer Kraft gesetzt, wenn ein Gebäudeteil aus dem Baustellen-Modelldatensatz oder ein Hindernis erreicht wird. Vorteilhafterweise kann die Flugdrohne dann auch automatisch eine Alternativroute berechnen, die der Arbeitsbereichsbegrenzung Rechnung trägt und/oder einem Hindernis ausweicht, wobei die Ausweichroute vorteilhafterweise derart bestimmt wird, dass der Lasthaken bzw. das Arbeitswerkzeug im Blickfeld der bildgebenden Sensorik der Flugdrohne bleibt.

Vorteilhafterweise kann die Flugdrohne steuerungstechnisch an verschiedene Arbeitsmaschinen, beispielsweise verschiedene Krane oder auch verschiedene Arbeitsmaschinen einer Baustelle wie beispielsweise wahlweise einem Bagger oder einem Kran steuerungstechnisch angebunden werden, je nachdem, welche Arbeitsmaschine gerade die Flugdrohne benötigt. Vorteilhafterweise kann die Flugdrohne hierbei eine Steuerungsschnittstelle besitzen, die eine Ansteuerung von verschiedenen Maschinen her gestattet. Insbesondere kann in dem Flugsteuerungs- und/oder Kamerasteuerungsmodul der Flugdrohne in Abhängigkeit des Ansteuersignals der jeweiligen Arbeitsmaschine eine Vorkonfigurierung erfolgen, beispielsweise unter Auslesen eines Vorkonfigurations-Datensatzes aus einer Konfigurationsbibliothek. Beispielsweise kann die Flugdrohne bei Ansteuerung durch einen Kran dahingehend vorkonfiguriert werden, dass sich die bildgebende Sensorik brennweitenmäßig auf einen Lasthaken einstellt, während bei Vorkonfiguration für beispielsweise einen Bagger die Flugdrohne für andere Flughöhen als für einen Kran und für andere Brennweiten vorkonfiguriert wird.

Bei einer solchermaßen für verschiedene Baumaschinen bzw. Arbeitsmaschinen verwendbaren Flugdrohne kann diese beispielsweise auf der Baustelle geparkt werden und von der jeweils benötigten Baumaschine angefordert werden.

Die Erfindung wird nachfolgend anhand eines bevorzugten Ausführungsbeispiels und zugehöriger Zeichnungen näher erläutert. In den Zeichnungen zeigen:

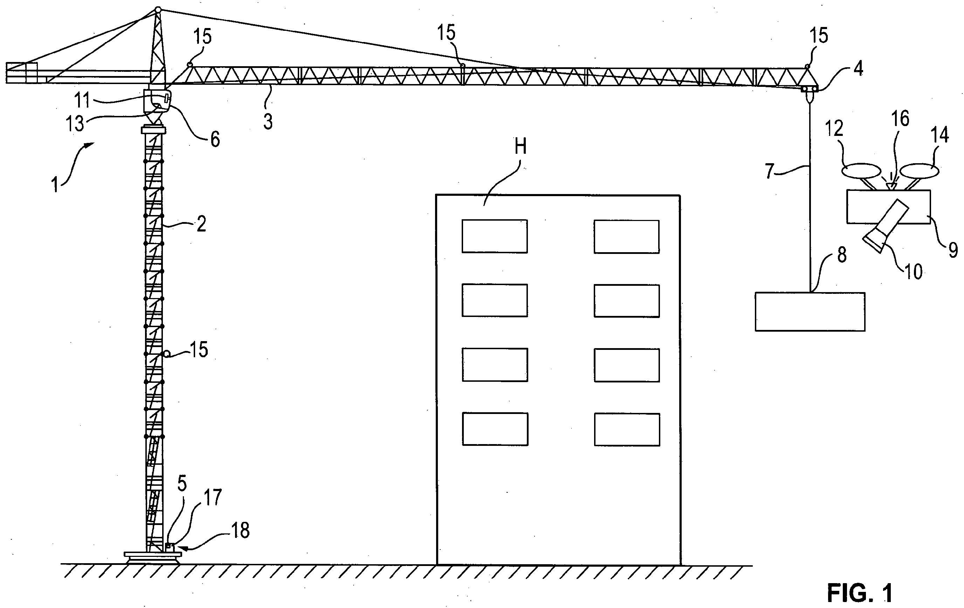

- Fig. 1:: eine schematische Seitenansicht einer Materialumschlagsmaschine in Form eines Krans, an dessen Lasthaken eine Last hinter einem Gebäude und damit außerhalb des Sichtbereichs der Kranführerkabine manövriert wird, wobei eine Flugdrohne mit einer Kamera dem Kranführer ein Kamerabild des Lasthakens und dessen Umgebung bereitstellt.

Wie Fig. 1 zeigt, kann der Kran 1 als Turmdrehkran ausgebildet sein, dessen Turm 2 einen Ausleger 3 trägt, an dem eine Laufkatze 4 verfahrbar gelagert ist. Der Ausleger 3 kann zusammen mit dem Turm 2 oder auch ohne den Turm 2 - je nach Ausbildung des Krans als Oben- oder Unterdreher - um eine aufrechte Achse verdreht werden, wozu ein Drehwerksantrieb vorgesehen ist. Der Ausleger 3 könnte ggf. auch auf- und niederwippbar um eine liegende Querachse ausgebildet sein, wobei ein geeigneter Wippantrieb beispielsweise im Zusammenspiel mit der Auslegerabspannung vorgesehen sein könnte. Die genannte Laufkatze 4 kann mittels einer Katzfahrwinde oder eines anderen Katzfahrantriebs verfahren werden.

Die genannten Antriebsvorrichtungen können von einer Steuervorrichtung 5 angesteuert werden, die eine stationäre Bedieneinheit mit geeigneten Eingabemitteln beispielsweise in Form von Joysticks in der Kranführerkabine 6 bzw. am Steuerstand des Krans oder einem Fernsteuerstand umfassen kann und/oder auch eine mobile Bedieneinheit mit entsprechenden Eingabemitteln aufweisen kann. Eine solche mobile Bedieneinheit kann beispielsweise in Form einer Funkfernsteuerung ausgebildet sein, die der Kranführer bei sich tragen kann, wenn er im Kranarbeitsbereich über die Baustelle läuft, um den Kran auch außerhalb der Kranführerkabine 6 steuern zu können. Der zuvor genannte Fernsteuerstand kann aber auch ein von der Baustelle entfernt eingerichteter Fernsteuerstand beispielsweise im Sinne eines Simulators sein.

Um den Lasthaken 8, der mit einem von der Laufkatze 4 ablaufenden Hubseil 7 verbunden sein kann, oder eine daran aufgenommene Last bzw. die Umgebung des Lasthakens 8 auch dann sehen zu können, wenn sich der Lasthaken 8 außerhalb des Sichtbereichs der Kranführerkabine 6 bzw. des Kranführers befindet, beispielsweise wenn - wie Fig. 1 zeigt - die Last hinter einem Gebäude abzusetzen ist, ist erfindungsgemäß eine Flugdrohne 9 vorgesehen, an der zumindest eine Kamera 10 montiert ist, mittels derer ein Kamerabild vom Lasthaken 8 und/oder der Lasthakenumgebung bereitgestellt werden kann. Das genannte Kamerabild ist vorteilhafterweise ein Live- oder Echtzeitbild im Sinne eines Fernseh- oder Videobilds und wird von der Kamera 10 der Flugdrohne 9 drahtlos zu einer Anzeigeeinheit 11 und/oder der Steuervorrichtung 5 des Krans 1 übertragen, wobei die genannte Anzeigeeinheit 11 beispielsweise ein Maschinenführerdisplay nach Art eines Tablets oder eines Bildschirms oder eines Monitors sein kann, der in der Kranführerkabine 6 montiert sein kann. Wird in der zuvor genannten Weise ein Fernsteuerstand oder eine mobile Bedieneinheit zum Steuern des Krans 1 verwendet, kann die genannte Anzeigeeinheit 11 in dem Fernsteuerstand oder an der mobilen Bedieneinheit vorgesehen sein.

Die Flugdrohne 9 ist mit einer Fernsteuereinrichtung 12 versehen, die es erlaubt, die Flugdrohne 9 fernzusteuern, insbesondere die Flugsteueraggregate wie beispielsweise Rotorblätter anzusteuern, um die Flugposition der Flugdrohne 9 fernzusteuern und/oder die Kamera 10 fernzusteuern, insbesondere hinsichtlich des Schwenkwinkels bzw. der Blickachse der Kamera 10 relativ zu dem Korpus der Flugdrohne 9 und/oder der Brennweite der Kamera 10.

Ein entsprechendes Fernsteuermodul kann in der Kranführerkabine 6 und/oder dem Fernsteuerstand oder der mobilen Bedieneinheit vorgesehen sein, beispielsweise mit entsprechenden Joysticks ausgestattet sein. Um eine einfache Bedienung zu ermöglichen, kann jedoch auch eine Sprachsteuerung und/oder eine Menüsteuerung für die Flugdrohne 9 vorgesehen sein, beispielsweise um aus mehreren vorbestimmten Relativpositionen der Flugdrohne 9 relativ zum Kran eine gewünschte Relativposition auszuwählen. Dies kann beispielsweise dadurch erfolgen, dass per Sprachsteuerung und/oder Menüsteuerung "Drohnenposition 1" eingegeben wird, die vorprogrammiert bzw. vorbestimmt in der Positionssteuervorrichtung 13 abgelegt sein kann.

Vorteilhafterweise kann die Position der Flugdrohne 9 relativ zum Kran 1 und/oder dessen Lasthaken zumindest weitgehend autonom und unabhängig vom Kran gesteuert werden, beispielsweise in an sich bekannter Weise über die genannten Joysticks der Fernsteuereinrichtung 12. Über das autonome Steuerungsmodul der Positionssteuervorrichtung 13 kann eine Wunschposition der Flugdrohne 9 relativ zum Lasthaken 8 angeflogen werden.

Alternativ oder zusätzlich zu einem solchen autonomen Positionssteuermodul kann die Positionssteuervorrichtung 13 ein automatisches Folgesteuerungsmodul aufweisen, um eine vorbestimmte Position der Flugdrohne 9 - beispielsweise die durch das autonome Positionssteuermodul willkürlich angeflogene Wunschposition und/oder eine vorbestimmte, vorprogrammierte Position - zu halten, auch wenn der Kran 1 Kranbewegungen ausführt und/oder der Lasthaken 8 bewegt wird, so dass die Flugdrohne 9 dem Lasthaken 8 weitgehend automatisch folgt und die vorbestimmte Relativposition hierzu hält.

Vorteilhafterweise ist eine Positionsbestimmungseinrichtung 18 vorgesehen, die automatisch kontinuierlich oder zyklisch die Position der Flugdrohne 9 relativ zu dem Kran 1 und/oder dessen Lasthaken 8 bestimmt, so dass die Positionssteuervorrichtung 13 in Abhängigkeit der bestimmten Relativposition die Flugdrohne 9 ansteuern kann.

Die Flugdrohne 9 kann hierzu beispielsweise eine GPS-Einheit 14 umfassen, mittels derer die absolute Raumposition der Flugdrohne 9 bestimmt und der Positionssteuervorrichtung 13 übermittelt wird. Andererseits kann die Position des Lasthakens 8 bestimmt werden, so dass die Positionssteuervorrichtung 13 die Flugdrohne 9 fernsteuern kann, um die Relativposition zu halten.

Die Lasthakenposition kann hierbei grundsätzlich ebenfalls per GPS bestimmt werden, beispielsweise indem in den Lasthaken eine GPS-Einheit integriert wird. Alternativ oder zusätzlich kann jedoch die Lasthakenposition auch aus der Stellung der Krankomponenten bestimmt, insbesondere von der Steuervorrichtung 5 des Krans berechnet werden, beispielsweise indem der Drehwinkel des Auslegers, die Position der Laufkatze 4 am Ausleger 3 und die Abspullänge des Hubseils 7 erfasst werden, woraus sich bei bekanntem Aufstellort des Krans 1 die Lasthakenposition zumindest näherungsweise bestimmen lässt, wenn man dynamische Pendelbewegungen oder Windeinflüsse vernachlässigt.

Alternativ oder zusätzlich zu einer solchen absoluten Positionsbestimmung kann die Position der Flugdrohne 9 auch relativ in einem kranfesten, d.h. sich mit dem Kran mitdrehenden Koordinatensystem bestimmt werden. Hierzu können an dem Kran 1, beispielsweise an dessen Ausleger 3 und dessen Turm 2, ggf. auch an dessen Laufkatze 4 und/oder dessen Lasthaken 8 Sende-/Empfangseinheiten beispielsweise in Form von Transpondereinheiten 15 vorgesehen sein, die vorteilhafterweise an mehreren, voneinander beabstandeten Stellen am Kran 1 angebracht sind. Die genannten Sende-/Empfangseinheiten 15 können mit einer entsprechenden Sende-/Empfangseinheit 16 an der Flugdrohne 9 kommunizieren. Beispielsweise kann dann von einer Ortungseinrichtung 17, die in die Steuervorrichtung 5 des Krans 1 integriert sein kann, aus den Signallaufzeiten eines Signals zwischen der Sende-/Empfangseinheit 16 an der Flugdrohne 9 und den jeweiligen Sende-/Empfangseinheiten 15 am Kran 1 die Abstände der Flugdrohne 9 von den jeweiligen Sende-/Empfangseinheiten 15 am Kran 1 und hieraus die Position der Flugdrohne 9 relativ zum Kran 1 bestimmt werden.

## Patentansprüche

1. Verfahren zum Steuern einer Materialumschlags- und/oder Baumaschine, insbesondere eines Krans, bei dem einem Maschinenführer und/oder einer Maschinensteuerung (5) ein Bild des Arbeitswerkzeugs, insbesondere Lasthakens (8), und einer Arbeitswerkzeugumgebung bereitgestellt wird, wobei das Bild von einer ferngesteuerten Flugdrohne (9), die mit zumindest einem bildgebenden Sensor (10) ausgestattet ist, bereitgestellt wird, wobei die Flugdrohne (9)
- in einem automatischen Folgemodus in Abhängigkeit einer Arbeitswerkzeugposition angesteuert wird derart, dass die Flugdrohne (9) Arbeitswerkzeugbewegungen automatisch folgt und eine gewünschte Position relativ zum Arbeitswerkzeug auch bei Arbeitswerkzeugbewegungen hält, und
- in einem autonomen Fernsteuermodus autonom ferngesteuert wird derart, dass von der Flugdrohne (9) verschiedene gewünschte Positionen relativ zu dem Arbeitswerkzeug angeflogen werden, wobei in einem Positionssteuerungsmodul eine Wunschposition für die Flugdrohne (9) relativ zu dem Arbeitswerkzeug eingegeben und die eingegebene Wunschposition dann von der Flugdrohne angeflogen wird,
**dadurch gekennzeichnet, dass**
mittels mehrerer, an der Flugdrohne (9) vorgesehener bildgebender Sensoren unterschiedlicher Bildgattung umfassend eine Kamera und einen Infrarotsensor verschiedene Bilder umfassend ein Kamerabild und ein Infrarotbild erfasst werden, wobei die verschiedenen Bilder umfassend das Kamerabild und das Infrarotbild von einem Bildbearbeitungsmodul überlagert und als gemeinsames Bild auf einer Anzeigeeinheit dargestellt werden,
wobei die Drohne von einer Positionssteuervorrichtung (13) in Abhängigkeit von Arbeitsbereichsbegrenzungen gesteuert wird, wobei die automatische Folgesteuerung übersteuert und der automatische Folgemodus außer Kraft gesetzt werden, wenn die Flugdrohne eine Arbeitsbereichsbegrenzung erreicht.

2. Verfahren nach dem vorhergehenden Anspruch, wobei die Position der Flugdrohne (9) relativ zu der Materialumschlags- und/oder Baumaschine, insbesondere deren Arbeitswerkzeug, kontinuierlich oder zyklisch durch eine Positionsbestimmungseinrichtung (18) automatisch bestimmt wird, wobei die Flugdrohne (9) von der Positionssteuervorrichtung (13) in Abhängigkeit eines Signals der Positionsbestimmungseinrichtung (18) angesteuert wird derart, dass die Relativposition zwischen Flugdrohne (9) und Maschine, insbesondere Arbeitswerkzeug zumindest näherungsweise konstant bleibt.

3. Verfahren nach einem der vorhergehenden Ansprüche, wobei der zumindest eine bildgebende Sensor (10) der Flugdrohne (9) in seiner Ausrichtung relativ zu einem Drohnenträgerkorpus und/oder in seiner Brennweite in Abhängigkeit einer Maschinenstellung und/oder einer Arbeitswerkzeugposition angesteuert wird derart, dass die Blickachse und/oder der Brennpunkt des bildgebenden Sensors Maschinen-, insbesondere Arbeitswerkzeugbewegungen auch bei Positionsänderungen der Flugdrohne (9) relativ zu der Maschine und/oder deren Arbeitswerkzeug automatisch folgt.

4. Verfahren nach einem der vorhergehenden Ansprüche, wobei die Flugdrohne (9) steuerungstechnisch an verschiedene Arbeitsmaschinen angebunden und über eine Steuerungsschnittstelle von den verschiedenen Arbeitmaschinen her angesteuert wird, wobei ein Flugsteuerungsmodul der Flugdrohne (9) in Abhängigkeit einer Ansteuersignals einer jeweiligen Arbeitsmaschine unter Auslesen eines Vorkonfigurations-Datensatzes aus einer Konfigurationsbibliothek für die genannte, jeweilige Arbeitsmaschine vorkonfiguriert wird.

5. Materialumschlags- und/oder Baumaschine, insbesondere Kran (1), mit einem bewegbaren Arbeitswerkzeug, insbesondere in Form eines Lasthakens (8), sowie zumindest einem bildgebenden Sensor (10) zum Bereitstellen eines Bilds des Arbeitswerkzeugs und/oder der Arbeitswerkzeugumgebung an eine Maschinenführeranzeigeeinheit (11) und/oder eine Maschinensteuerung (5), wobei der bildgebende Sensor (10) an einer ferngesteuerten Flugdrohne (9) montiert ist, wobei die Maschinensteuerung (5) und/oder die Maschinenführeranzeigeeinheit (11) einen Bildempfänger zum Empfangen des Bilds des bildgebenden Sensors (10) von der Flugdrohne (9) aufweist, wobei eine Positionssteuervorrichtung (13)
- ein automatisches Folgesteuermodul zum Ansteuern der Flugdrohne (9) in einem automatischen Folgemodus in Abhängigkeit einer Arbeitwerkzeugposition derart, dass die Flugdrohne (9) Arbeitswerkzeugbewegungen automatisch folgt und eine gewünschte Position relativ zum Arbeitswerkzeug auch bei Arbeitswerkzeugbewegungen hält, und
- ein autonomes Steuermodul zum autonomen Fernsteuern der Flugdrohne derart, dass von der Flugdrohne (9) verschiedene gewünschte Positionen relativ zum Arbeitswerkzeug angeflogen werden, aufweist, wobei das genannte autonome Steuermodul Eingabemittel zum Eingeben einer Wunschposition für die Flugdrohne (9) relativ zu dem Arbeitswerkzeug aufweist und die eingegebene Wunschposition von der Flugdrohne (9) anfliegbar ist,
**dadurch gekennzeichnet, dass**
- an der Flugdrohne (9) mehrere bildgebende Sensoren unterschiedlicher Bildgattung umfassend eine Kamera in Verbindung mit einem Infrarotsensor, zur Erfassung verschiedener Bilder vorgesehen sind, wobei die Bilder zumindest zweier verschiedener Sensoren von einem Bildbearbeitungs-Modul zu einem gemeinsam Bild überlagerbar sind, und das gemeinsame, überlagerte Bild auf der Maschinenführeranzeigeeinheit (11) anzeigbar ist,
- wobei die Positionssteuervorrichtung (13) dazu ausgebildet ist, die Flugdrohne (9) in Abhängigkeit von Arbeitsbereichtsbegrenzungen zu steuern, nämlich die automatische Folgesteuerung zu übersteuern und den automatischen Folgemodus außer Kraft zu setzen, wenn die Flugdrohne eine Arbeitsbereichsbegrenzung erreicht.

6. Materialumschlags- und/oder Baumaschine nach dem vorhergehenden Anspruch, wobei eine/die Positionssteuervorrichtung (13) eine Spracherkennungseinrichtung zum Eingeben von Steuerbefehlen mittels Sprache und/oder eine Gestenerkennungseinrichtung, insbesondere umfassend eine Kamera mit nachgeordneter Bildauswerteeinrichtung, zum Eingeben von Steuerbefehlen mittels Gesten aufweist.

7. Materialumschlags- und/oder Baumaschine nach einem der vorhergehenden Ansprüche 5-6, wobei eine Positionsbestimmungseinrichtung (18) zum Bestimmen der Position der Flugdrohne (9) relativ zu einem Maschinenelement der Materialumschlags- und/oder Baumaschine, insbesondere deren Arbeitswerkzeug, vorgesehen ist, wobei die Positionssteuervorrichtung (13) dazu ausgebildet ist, die Flugdrohne (9) in Abhängigkeit der automatisch bestimmten Relativposition zu steuern.

8. Materialumschlags- und/oder Baumaschine nach dem vorhergehenden Anspruch, wobei die Flugdrohne (9) eine GPS-Einheit zur absoluten Positionsbestimmung der Flugdrohne (9) aufweist, wobei die Positionssteuervorrichtung (13) zum Steuern der Position der Flugdrohne (9) relativ zur Maschine dazu ausgebildet ist, die Flugdrohne (9) in Abhängigkeit der absoluten Positionsdaten der Flugdrohne (9) und absoluter Positionsdaten der Materialumschlags- und/oder Baumaschine und/oder deren Arbeitswerkzeug zu steuern.

9. Materialumschlags- und/oder Baumaschine nach dem vorhergehenden Anspruch, wobei die Positionsbestimmungseinrichtung (18) eine Signal-Ortungsvorrichtung zum Orten eines von der Flugdrohne (9) abgegebenen Signals aufweist, wobei die genannte Signal-Ortungsvorrichtung an der Materialumschlags- und/oder Baumaschine angebrachte, voneinander beabstandete Sende-/Empfangseinheiten (15) zum Kommunizieren mit einer Sende-/Empfangseinheit (16) an der Flugdrohne (9) sowie eine Auswerteeinrichtung zum Auswerten der übertragenen Signale zwischen den maschinenseitigen Sende-/Empfangseinheiten (15) und der drohnenseitigen Sende-/Empfangseinheit (16) hinsichtlich vorbestimmter Signaleigenschaften, insbesondere hinsichtlich Signallaufzeit und/oder Signalstärke, und Bestimmen der Position der Flugdrohne (9) aus den Signaleigenschaften aufweist.

10. Materialumschlags- und/oder Baumaschine nach einem der vorhergehenden Ansprüche 5-9, wobei als bildgebender Sensor (10) ferner ein Radarsensor und/oder ein Photomischdetektor und/oder ein Lichtlaufzeitsensor vorgesehen ist.

11. Materialumschlags- und/oder Baumaschine nach einem der vorhergehenden Ansprüche 5-10, wobei der zumindest eine bildgebende Sensor dazu ausgebildet ist, ein dreidimensinales Bild bereitzustellen und/oder das von der Maschinenführeranzeigeeinheit (11) angezeigte Bild ein 3D-Bild ist.

12. Materialumschlags- und/oder Baumaschine nach einem der vorhergehenden Ansprüche 5-11, wobei die Materialumschlags- und/oder Baumaschine als Kran ausgebildet ist und eine bewegbaren Lasthaken (8) aufweist, wobei das automatische Folgesteuermodul der Positionssteuervorrichtung (13) dazu ausgebildet ist, die Flugdrohne (9) in Abhängigkeit der Lasthakenposition anzusteuern derart, dass die Flugdrohne (9) automatisch Lasthakenbewegungen folgt, und die Eingabemittel des autonomen Steuermoduls dazu ausgebildet sind, eine Wunschposition der Flugdrohne (9) in Bezug auf den Lasthaken einzugeben.

## Claims

1. Method of controlling a material transfer machine and/or a construction machine, in particular a crane, in which an image of a piece of working equipment, in particular of a lifting hook (8), and/or of an environment of the piece of working equipment is provided to a machine operator and/or to a machine control (5), **characterized in that** the image is provided by a remote controlled aerial drone (9) that is equipped with at least one imaging sensor (10), wherein the aerial drone (9)
- is controlled in an automatic follow mode depending on a position of a piece of working equipment such that the aerial drone (9) automatically follows movements of the piece of working equipment and maintains a desired position relative to the piece of working equipment, also in the case of downward movements of the piece of working equipment, and
- is autonomously remote-controlled in an autonomous remote control mode such that different desired positions relative to the machine and/or to its piece of working equipment are flown to by the aerial drone (9), wherein a desired position for the aerial drone (9) relative to the piece of working equipment is input into a position control module and the input desired position is then flown to by the aerial drone,
**characterized in that**
by means of a plurality of imaging sensors of different image categories provided at the aerial drone (9), comprising a camera and an infrared sensor, different images, comprising a camera image and an infrared image, are detected, wherein the different images comprising the camera image and the infrared image are superimposed by an image processing module and are shown as a common image on a display unit,
wherein the drone is controlled by a position control apparatus (13) depending on working area delimitations, wherein the automatic follow control is overridden and the automatic follow mode is invalidated when the areal drone reaches a working area delimitation.

2. Method in accordance with the preceding claim, wherein the position of the aerial drone (9) relative to the material transfer machine and/or to the construction machine, in particular its piece of working equipment, is automatically determined continuously or cyclically by a position determination device (18), wherein the aerial drone (9) is controlled by the position control apparatus (13) in dependence on a signal of the position determination device (18) such that the relative position between the aerial drone (9) and the machine, in particular the piece of working equipment, remains at least approximately constant.

3. Method in accordance with one of the preceding claims, wherein the at least one imaging sensor (10) of the aerial drone (9) is controlled relative to a drone carrier body in its orientation and/or in its focal length in dependence on a machine position and/or on a position of the piece of working equipment such that the viewing axis and/or the focus of the imaging sensor also automatically follows movements of the machine, in particular of the piece of working equipment on position changes of the aerial drone (9) relative to the machine and/or to its piece of working equipment.

4. Method according to one of the preceding claims, wherein the aerial drone (9) is connected to various working machines for control purposes and is controlled on the side of the various working machines via a control interface, wherein a flight control module of the aerial drone (9) is preconfigured in response to a control signal from a respective working machine by reading a preconfiguration data set from a configuration library for the respective working machine.

5. Material handling and/or construction machine, in particular a crane (1), with a movable working tool, in particular in the form of a lifting hook (8), and at least one imaging sensor (10) for providing an image of the working tool and/or the working tool environment to a machine operator display unit (11) and/or a machine control (5), wherein the imaging sensor (10) is mounted on a remote-controlled aerial drone (9), wherein the machine control (5) and/or the machine operator display unit (11) has an image receiver for receiving the image of the imaging sensor (10) from the aerial drone (9), wherein a position control device (13) comprises
- an automatic follow mode control module for controlling the aerial drone (9) in an automatic tracking mode in dependence on position of the piece of working equipment such that the aerial drone (9) automatically follows movements of the piece of working equipment and maintains a desired position relative to the piece of working equipment even during movements of the piece of working equipment, and
- an autonomous control module for autonomously remote controlling the aerial drone such that the aerial drone (9) flies to different desired positions relative to the piece of working equipment, wherein the autonomous control module has input means for inputting a desired position for the aerial drone (9) relative to the piece of working equipment and the inputted desired position can be flown to by the aerial drone (9),
**characterized in that**
- a plurality of imaging sensors of different image categories including a camera in conjunction with an infrared sensor, for capturing different images are provided at the aerial drone (9), wherein the images from at least two different sensors can be superimposed by an image processing module to form a common image, and the common, superimposed image can be displayed on the machine operator display unit (11),
- wherein the position control device (13) is configured to control the aerial drone (9) in dependence on working area delimitations, namely to override the automatic follow mode control and to disable the automatic tracking mode when the aerial drone reaches a working area delimitation.

6. Material transfer machine and/or construction machine in accordance with the preceding claim, wherein a/the position control apparatus (13) has a voice recognition device for inputting control commands by means of voice and/or has a gesture recognition device, in particular comprising a camera having a downstream image evaluation device, for inputting control commands by means of gestures.

7. Material transfer machine and/or construction machine in accordance with one of the preceding claims 5 to 6, wherein a position determination device (18) is provided for determining the position of the aerial drone (9) relative to a machine element of the material transfer machine and/or of the construction machine, in particular its piece of working equipment, wherein the position control apparatus (13) is configured to control the aerial drone (9) in dependence on the automatically determined relative position.

8. Material transfer machine and/or construction machine in accordance with the preceding claim, wherein the aerial drone (9) has a GPS unit for the absolute position determination of the aerial drone (9), with the position control apparatus (13) for controlling the position of the aerial drone (9) relative to the machine being configured to control the aerial drone (9) in dependence on the absolute position data of the areal drone (9) and on the absolute position data of the material transfer machine and/or the construction machine and/or its piece of working equipment.

9. Material transfer machine and/or construction machine in accordance with the preceding claim, wherein the position determination device (18) has a signal location apparatus for locating a signal output by the aerial drone (9), with said signal location apparatus having transceivers (15) attached to the material transfer machine and/or construction machine and spaced apart from one another for communicating with a transceiver (16) at the aerial drone (9) and having an evaluation device for evaluating the transmitted signals between the transceivers (15) at the machine side and the transceiver (16) at the drone side with respect to predetermined signal properties, in particular with respect to the signal time of flight and/or to the signal strength, and for determining the position of the aerial drone (9) from the signal properties.

10. Material transfer machine and/or construction machine in accordance with one of the preceding claims 5 to 9, wherein a radar sensor and/or a photonic mixing device and/or a time of flight sensor for light is/are provided as the imaging sensor (10).

11. Material transfer machine and/or construction machine in accordance with one of the preceding claims 5 to 10, wherein the at least one imaging sensor is configured to provide a three-dimensional image; and/or wherein the image displayed by the machine operator display unit (11) is a 3D image.

12. Material transfer machine and/or construction machine in accordance with one of the preceding claims 5 to 11, wherein the material transfer machine and/or construction machine is designed as a crane and comprises a lifting hook (8), wherein the automatic follow mode control module of the position control apparatus (13) is configured to control the aerial drone (9) in dependence on the lifting hook position, in such a way, that the aerial drone (9) automatically follows movements of the lifting hook, and that the input means of the autonomous control module are configured for inputting a desired position of the aerial drone (9) relative to the lifting hook.

## Revendications

1. Procédé de commande d'un engin de transbordement de matériau et/ou de construction, en particulier d'une grue, où une image de l'outil de travail, en particulier d'un crochet de charge (8), et d'un environnement d'outil de travail est fournie à un conducteur d'engin et/ou à une commande d'engin (5), dans lequel l'image est fournie par un drone (9) commandé à distance, qui est équipé d'au moins un détecteur d'imagerie (10), dans lequel le drone (9)
- est piloté dans un mode de suivi automatique en fonction d'une position d'outil de travail de telle manière que le drone (9) suit automatiquement des mouvements d'outil de travail et garde une position souhaitée par rapport à l'outil de travail également lors de mouvements d'outil de travail, et
- est commandé à distance de manière autonome dans un mode de commande à distance autonome de telle manière que différentes positions souhaitées par rapport à l'outil de travail sont survolées par le drone (9), dans lequel une position souhaitée pour le drone (9) par rapport à l'outil de travail est entrée dans un module de commande de position et la position souhaitée entrée est alors survolée par le drone,
**caractérisé en ce que**
différentes images comprenant une image de caméra et une image infrarouge sont détectées au moyen de plusieurs capteurs d'imagerie de type différent prévus sur le drone (9) comprenant une caméra et un capteur infrarouge, dans lequel les différentes images comprenant l'image de caméra et l'image infrarouge sont superposées par un module de traitement d'image et sont représentées sur une unité d'affichage en tant qu'image commune,
dans lequel le drone est commandé par un dispositif de commande de position (13) en fonction de limites de zone de travail, dans lequel la commande de suivi automatique est surrégulée et le mode de suivi automatique est mis hors service lorsque le drone atteint une limite de zone de travail.

2. Procédé selon la revendication précédente, dans lequel la position du drone (9) par rapport à l'engin de transbordement de matériau et/ou de construction, en particulier de son outil de travail, est définie automatiquement en continu ou de manière cyclique par un système de définition de position (18), dans lequel le drone (9) est piloté par le dispositif de commande de position (13) en fonction d'un signal du système de définition de position (18) de telle manière que la position relative entre le drone (9) et l'engin, en particulier l'outil de travail, reste au moins approximativement constante.

3. Procédé selon l'une des revendications précédentes, dans lequel l'au moins un capteur d'imagerie (10) du drone (9) est piloté dans son orientation par rapport à un corps de support de drone et/ou dans sa distance focale en fonction d'un emplacement d'engin et/ou d'une position d'outil de travail de telle manière que l'axe de vision et/ou le point focal du capteur d'imagerie suivent automatiquement des mouvements d'engin, en particulier des mouvements d'outil de travail également lors de changements de position du drone (9) par rapport à l'engin et/ou à son outil de travail.

4. Procédé selon l'une quelconque des revendications précédentes, dans lequel le drone (9) est rattaché par une technique de commande à différents engins de travail et est piloté par les différents engins de travail par l'intermédiaire d'une interface de commande, dans lequel un module de commande de vol du drone (9) est préconfiguré en fonction d'un signal de pilotage d'un engin de travail respectif en lisant un jeu de données de préconfiguration issu d'une bibliothèque de configuration pour ledit engin de travail respectif.

5. Engin de transbordement de matériau et/ou de construction, en particulier grue (1), avec un outil de travail pouvant être déplacé, en particulier sous la forme d'un crochet de charge (8), ainsi qu'au moins un capteur d'imagerie (10) destiné à fournir une image de l'outil de travail et/ou de l'environnement d'outil de travail à une unité d'affichage au conducteur d'engin (11) et/ou à une commande d'engin (5), dans lequel le capteur d'imagerie (10) est monté sur un drone (9) commandé à distance, dans lequel la commande d'engin (5) et/ou l'unité d'affichage au conducteur d'engin (11) présente un récepteur d'image destiné à recevoir l'image du capteur d'imagerie (10) du drone (9), dans lequel un dispositif de commande de position (13) présente
- un module de commande de suivi automatique destiné à piloter le drone (9) dans un mode de suivi automatique en fonction d'une position d'outil de travail de telle manière que le drone (9) suit automatiquement des mouvements d'outil de travail et garde une position souhaitée par rapport à l'outil de travail également lors de mouvements d'outil de travail, et
- un module de commande autonome destiné à commander à distance de manière autonome le drone de telle manière que différentes positions souhaitées par rapport à l'outil de travail sont survolées par le drone (9), dans lequel ledit module de commande autonome présente des moyens d'entrée pour entrer une position souhaitée pour le drone (9) par rapport à l'outil de travail et la position souhaitée entrée peut être survolée par le drone (9),
**caractérisé en ce que**
- plusieurs capteurs d'imagerie de type différent comprenant une caméra en lien avec un capteur infrarouge, destinés à détecter différentes images sont prévus sur le drone (9), dans lequel les images d'au moins deux capteurs différents peuvent être superposées par un module de traitement d'image en une image commune, et l'image superposée commune peut être affichée sur l'unité d'affichage au conducteur d'engin (11),
- dans lequel le dispositif de commande de position (13) est réalisé pour commander le drone (9) en fonction de limites de zone de travail, à savoir pour surréguler la commande de suivi automatique et mettre hors service le mode de suivi automatique lorsque le drone atteint une limite de zone de travail.

6. Engin de transbordement de matériau et/ou d'engin selon la revendication précédente, dans lequel un/le dispositif de commande de position (13) présente un système de reconnaissance vocale destiné à entrer des instructions de commande au moyen de la voix et/ou un système de reconnaissance gestuelle, en particulier comprenant une caméra avec un système d'évaluation d'image disposé en aval, destiné à entrer des instructions de commande au moyen de gestes.

7. Engin de transbordement de matériau et/ou de construction selon l'une quelconque des revendications 5- 6, dans lequel un système de définition de position (18) est prévu pour définir la position du drone (9) par rapport à un élément d'engin de l'engin de transbordement de matériau et/ou de construction, en particulier de son outil de travail, dans lequel le dispositif de commande de position (13) est réalisé pour commander le drone (9) en fonction de la position relative définie automatiquement.

8. Engin de transbordement de matériau et/ou de construction selon la revendication précédente, dans lequel le drone (9) présente une unité GPS pour la définition absolue de position du drone (9), dans lequel le dispositif de commande de position (13) destiné à commander la position du drone (9) par rapport à l'engin est réalisé pour commander le drone (9) en fonction des données de position absolues du drone (9) et de données de position absolues de l'engin de transbordement de matériau et/ou de construction et/ou de son outil de travail.

9. Engin de transbordement de matériau et/ou de construction selon la revendication précédente, dans lequel le système de définition de position (18) présente un dispositif de localisation de signaux destiné à localiser un signal émis par le drone (9), dans lequel ledit dispositif de localisation de signaux présente des unités d'envoi/de réception (15) tenues à distance les unes des autres, installées sur l'engin de transbordement de matériau et/ou de construction, destinées à communiquer avec une unité d'envoi/de réception (16) sur le drone (9) ainsi qu'un système d'évaluation destiné à évaluer les signaux transmis entre les unités d'envoi/de réception côté engin (15) et l'unité d'envoi/de réception côté drone (16) quant à des caractéristiques de signal prédéfinies, en particulier quant au temps de propagation de signaux et/ou à l'intensité de signaux, et destiné à définir la position du drone (9) à partir des propriétés de signaux.

10. Engin de transbordement de matériau et/ou de construction selon l'une quelconque des revendications précédentes 5-9, dans lequel en outre un capteur radar et/ou un détecteur mixte de photo et/ou un capteur de temps de propagation de la lumière sont prévus en tant que capteur d'imagerie (10).

11. Engin de transbordement de matériau et/ou de construction selon l'une quelconque des revendications 5 - 10, dans lequel l'au moins un capteur d'imagerie est réalisé pour fournir une image tridimensionnelle et/ou l'image affichée par l'unité d'affichage au conducteur d'engin (11) est une image 3D.

12. Engin de transbordement de matériau et/ou de construction selon l'une quelconque des revendications précédentes 5-11, dans lequel l'engin de transbordement de matériau et/ou de construction est réalisé en tant qu'une grue et présente un crochet de charge (8) pouvant être déplacé, dans lequel le module de commande de suivi automatique du dispositif de commande de position (13) est réalisé pour piloter le drone (9) en fonction de la position de crochet de charge de telle manière que le drone (9) suit automatiquement des mouvements de crochet de charge, et les moyens d'entrée du module de commande autonome sont réalisés pour entrer une position souhaitée du drone (9) par rapport au crochet de charge.
